# NEUE EUROPÄISCHE PATENTSCHRIFT

(11) **EP 2 870 613 B2**
(45) Veröffentlichungstag und Bekanntmachung des Hinweises auf die Entscheidung über den Einspruch: **21.09.2022**
(45) Hinweis auf die Patenterteilung: 20.09.2017
(21) Anmeldenummer: 13726114.5
(22) Anmeldetag: 27.05.2013
(51) Int. Cl.: H01F 7/08, F16D 59/02, H01F 7/16, H01F 3/10

(54) **ELEKTROMAGNET, ELEKTROMAGNETISCH BETÄTIGBARE BREMSE UND BREMSMOTOR**
ELECTROMAGNET, ELECTROMAGNETICALLY ACTUABLE BRAKE AND BRAKE MOTOR
ÉLECTROAIMANT, FREIN À ACTIONNEMENT ÉLECTROMAGNÉTIQUE ET MOTEUR-FREIN

(30) Priorität: 06.07.2012 DE 102012013350
(43) Veröffentlichungstag der Anmeldung: 13.05.2015
(73) Patentinhaber: SEW-EURODRIVE GmbH & Co. KG, 76646 Bruchsal (DE)
(72) Erfinder: ASCHOFF, Stefan, D-64297 Darmstadt (DE); HEINRICH, Pascal, F-67480 Roeschwoog (DE)
(86) Internationale Anmeldenummer: PCT/EP2013/001557
(87) Internationale Veröffentlichungsnummer: WO 2014/005664

(56) Entgegenhaltungen:
- EP-A2- 0 936 636
- DE-A1- 1 959 460
- DE-A1-102006 062 302
- DE-A1-102007 038 848
- DE-B4-112007 002 205
- DE-U1-202008 008 650
- US-A- 2 273 073

## Beschreibung

Die Erfindung betrifft einen Elektromagnet, eine elektromagnetisch betätigbare Bremse und einen Bremsmotor.

Es ist allgemein bekannt, dass ein Elektromagnet eine Spulenwicklung aufweist, die in einen Magnetkörper eingelegt ist.

Aus der DE 10 2006 062 302 A1 ist als nächstliegender Stand der Technik eine Elektromagnet für eine elektromagnetisch betätigbare Bremse bekannt.

Aus der US 2 273 073 A ist ein Elektromagnet bekannt.

Aus der EP 0 936 636 A2 ebenfalls ein Elektromagnet bekannt.

Der Erfindung liegt daher die Aufgabe zugrunde, eine einfache Herstellung und eine möglichst kompakte leistungsfähige Bremse weiterzubilden.

Erfindungsgemäß wird die Aufgabe bei dem Elektromagnet nach den in Anspruch 1, bei der elektromagnetisch betätigbaren Bremse nach den in Anspruch 10 und bei dem Bremsmotor nach den in Anspruch 11 angegebenen Merkmalen gelöst.

Wichtige Merkmale der Erfindung bei dem Elektromagnet sind, dass der Elektromagnet, insbesondere Bremsspule, insbesondere für eine elektromagnetisch betätigbare Bremse,
eine in einem Spulenträger aufgenommene Spulenwicklung aufweist,
wobei der Spulenträger in einem Magnetkörper aufgenommen ist,
wobei der Magnetkörper zwei- oder mehrteilig aufgebaut ist,
wobei ein Innenpol aus einem ersten Material gefertigt ist und wobei der Außenpol aus einem zweiten Material gefertigt ist,
wobei das erste Material eine höhere spezifische magnetische Permeabilität aufweist als das zweite Material.

Von Vorteil ist dabei, dass der Innenpol eine hohe magnetische Feldstärke ohne in Sättigung zu gehen durchleitet. Der Außenpol ist aus einem anderen, beispielsweise kostengünstigeren, Material als der Innenpol herstellbar. Somit ist im Innenpol eine hohe Feldstärke vorsehbar, bevor die Sättigung des Materials erreicht wird. Der Außenpol ist zwar nur mit einer niedrigeren Feldstärke beaufschlagbar, bevor die Sättigung erreicht wird, weil niedriger permeables Material als für den Innenpol verwendet wird; jedoch ist der Außenpol aus einem kostengünstigeren Material fertigbar.

Bei einer vorteilhaften Ausgestaltung ist die Spulenwicklung eine Ringwicklung. Von Vorteil ist dabei, dass eine einfache Herstellung ermöglicht ist.

Bei einer vorteilhaften Ausgestaltung ist das erste Material ein Stahl oder ein Ferrit und/oder das zweite Material ist ein Sphäroguss. Von Vorteil ist dabei, dass für den Außenpol ein kostengünstiges Material verwendbar ist und für den Innenpol ein höher permeables Material verwendet ist. Somit ist eine kompakte leistungsfähige Bremse herstellbar, insbesondere ist eine große Wicklung im Magnetkörper ausführbar und eine nur geringe Masse des Magnetkörpers einsetzbar. Der Massenanteil und/oder Volumenanteil der Spulenwicklung im Vergleich zum entsprechenden Anteil des Magnetkörpers ist daher möglichst hoch wählbar.

**Erfindungsgemäß** ist der Innenpol in ein anderes Teil des Magnetkörpers, insbesondere Rücken des Magnetkörpers, eingepresst und/oder ist kraftschlüssig mit diesem Teil verbunden. Von Vorteil ist dabei, dass eine einfache Herstellung erreichbar ist.

**Erfindungsgemäß** ist der Außenpol des Magnetkörpers mit dem Rücken des Magnetkörpers einstückig, also einteilig, ausgeführt. Von Vorteil ist dabei, dass eine sehr große axiale Tiefe des Aufnahmebereichs für die Bremsspule erzeugbar ist.

**Erfindungsgemäß** ist der Innenpol im Bereich der Verbindung mit dem anderen Teil des Magnetkörpers verjüngt ausgeführt, so dass ein Hinterschnitt gebildet ist, in welchem der Spulenträger mit Spulenwicklung begrenzt ist, insbesondere zwischen Hinterschnitt und Rücken des Magnetkörpers. Von Vorteil ist dabei, dass eine einfache Verbindung zwischen Spulenträger und Magnetkörper, insbesondere Innenpol, erreichbar ist.

Bei einer vorteilhaften Ausgestaltung ist der Spulenträger samt Spulenwicklung mittels Vergussmasse im Magnetkörper vergossen. Von Vorteil ist dabei, dass eine erhöhte mechanische Stabilität erreichbar ist.

Bei einer vorteilhaften Ausgestaltung ist ein Anschlussteil, an welchem ein jeweiliges Ende des Spulenwicklungsdrahtes elektrisch verbunden und eine Versorgungsleitung, insbesondere eine Litzenleitung, ist in einen am Spulenträger ausgebildeten taschenförmigen Aufnahmebereich eingeschoben,
insbesondere wobei der Innenpol im vom Anschlussteil überdeckten Umfangswinkelbereich eine Abflachung aufweist. Von Vorteil ist dabei, dass eine geschützte Aufnahme des Anschlussteils vorgesehen ist, an welchem die Spulenwicklungsdrähte mit Versorgungsleitungen verbunden sind.

Bei einer vorteilhaften Ausgestaltung ist der Innenpol im Wesentlichen zylindrisch ausgeformt. Von Vorteil ist dabei, dass die Ringspule in einfacher Weise aufnehmbar ist.

Bei einer vorteilhaften Ausgestaltung ist der Außenpol als Rotationskörper ausgebildet,
insbesondere wobei eine Vertiefung zur Führung von elektrischen Leitungen am Außenumfang des Außenpols ausgeformt oder eingearbeitet ist und/oder an der einem Motor zugewandten axialen Stirnseite des Außenpols Bohrlöcher, insbesondere in Umfangsrichtung regelmäßig voneinander beabstandete Bohrlöcher, ausgeformt oder eingearbeitet sind, insbesondere zur Aufnahme von Führungselementen zur Führung einer Ankerscheibe einer Bremse und/oder Beabstandungselementen, welche den Außenpol zu dem mit dem Außenpol verbindbaren Elektromotor beabstanden. Von Vorteil ist dabei, dass eine einfache Herstellung ermöglicht ist.

Bei einer vorteilhaften Ausgestaltung ist der Spulenträger ein Spritzgusskunststoffteil. Von Vorteil ist dabei, dass eine einfache Herstellung erreichbar ist, wobei ein elektrisch isolierender Kunststoff verwendbar ist.

Bei einer vorteilhaften Ausgestaltung ist am Spulenträger ein in Umfangsrichtung umlaufender Kabelführungskanal ausgebildet. Von Vorteil ist dabei, dass eine Kabelführung integriert ist am Spulenträger.

Bei einer vorteilhaften Ausgestaltung ist der Spulenträger samt Spulenwicklung mittels Vergussmasse im Magnetkörper vergossen. Von Vorteil ist dabei, dass eine erhöhte mechanische Stabilität erreichbar ist. Die Vergussmasse bewirkt außerdem eine verbesserte Wärmeableitung.

Wichtige Merkmale bei der elektromagnetisch betätigbaren Bremse sind, dass sie mit einem solchen Elektromagnet ausgeführt ist. Somit ist die Bremse sehr kompakt ausführbar und weist eine hohe Leistungsfähigkeit auf.

Wichtige Merkmale bei dem Bremsmotor sind, dass der Bremsmotor einen Elektromotor mit einer solchen elektromagnetisch betätigbaren Bremse umfasst. Von Vorteil ist dabei, dass eine kompakte leistungsfähige Bremse am Motor integrierbar ist, so dass das Gewicht des Motors sehr gering ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

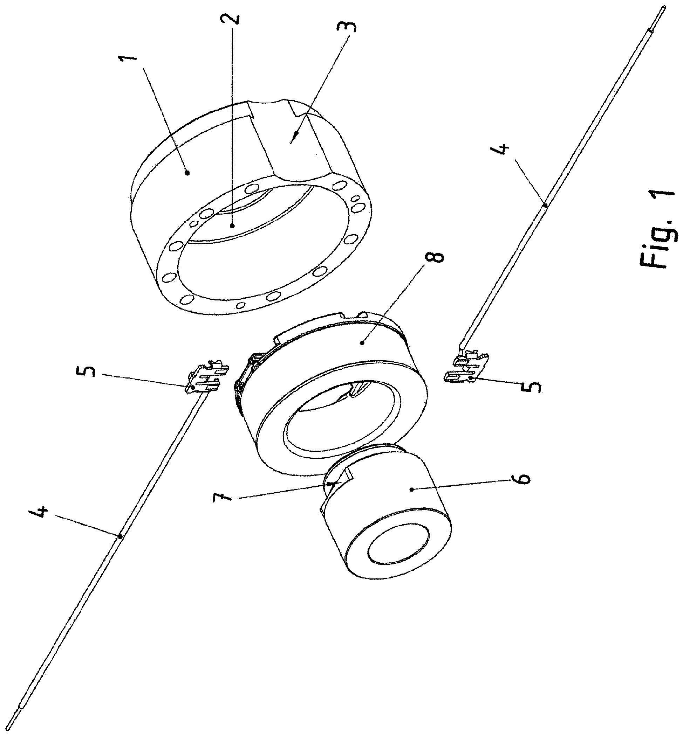

In der Figur 1 ist eine explodierte Darstellung einer Bremsspule für eine elektromagnetisch betätigbare Bremse gezeigt.

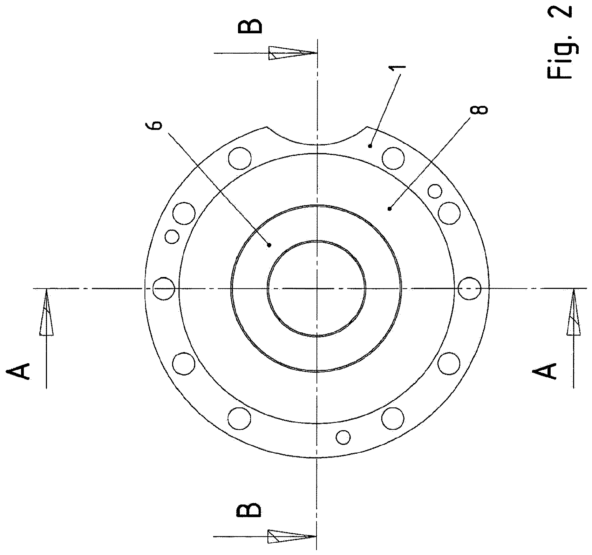

In der Figur 2 ist eine Vorderansicht der Bremsspule gezeigt.

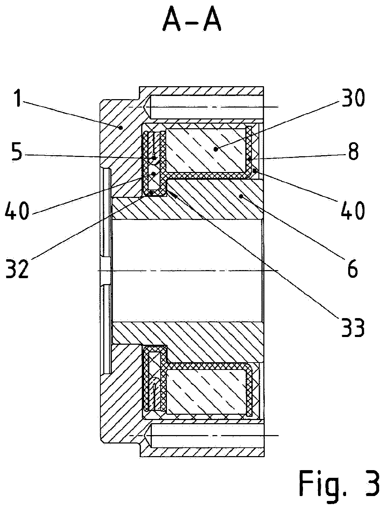

In der Figur 3 ist ein zugehöriger Längsschnitt gezeigt.

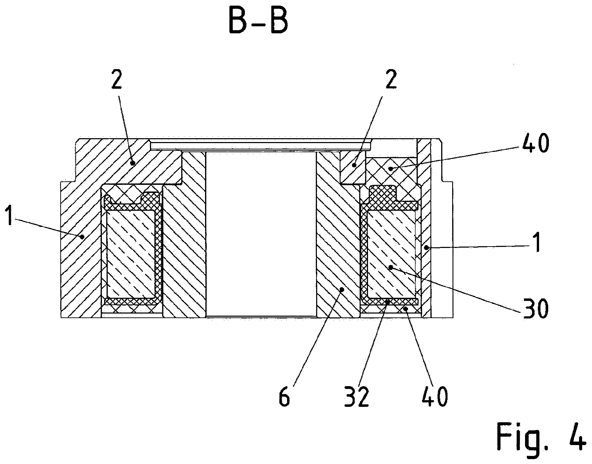

In der Figur 4 ist ein zugehöriger Querschnitt gezeigt.

Wie in den Figuren gezeigt, weist ein Magnetkörper einer Bremsspule einer elektromagnetisch betätigbaren Bremse einen ringförmigen Außenpol 1 des Magnetkörpers auf und einen Rücken 2 des Magnetkörpers, wobei Außenpol 1 und Rücken 2 einstückig ausgeführt sind.

Als Material des Magnetkörpers wird vorzugsweise ein ferromagnetisches Material eingesetzt, insbesondere beispielsweise ein ferromagnetischer Stahl oder ein Stahlguss, insbesondere Sphäroguss.

Der Rücken 2 weist eine mittig angeordnete, insbesondere kreisförmige, Ausnehmung auf. Somit ist der Rücken 2 lochscheibenartig ausgeführt.

Der Innenpol 6 ist im Wesentlichen zylindrisch ausgeführt und kraftschlüssig, insbesondere mittels Presspassung, mit dem Magnetkörper verbunden. Bei der Herstellung der Bremse wird der Innenpol 6 in die Ausnehmung im Rücken 2 eingepresst.

Der Innenpol 6 ist aus einem Material ausgeführt, das eine höhere spezifische magnetische Permeabilität aufweist als der Außenpol 1 mit Rücken 2. Beispielsweise ist als Material des Innenpols 6 Ferrit oder ein anderes hochpermeables Material verwendbar. Auf diese Weise ist eine hohe Feldstärke im Innenpol 6 durchleitbar, ohne dass Sättigung einritt.

Der Außenpol 1 weist eine axial verlaufende Vertiefung 3 zur Kabelführung, insbesondere zur Führung der Statorleitungen eines mit der Bremse verbundenen Elektromotors, auf. Somit sind die Statorwicklungsleitungen eines Elektromotors, an welchem die Bremse angebaut oder in welchen die Bremse eingebaut ist, platzsparend vorbeiführbar an der Bremse und von dort dann zu einem Anschlusskasten führbar, in welchem Versorgungsleitungen für Versorgung des Motors verbindbar sind. Außerdem sind auch die Versorgungsleitungen der Bremsspule vom Anschlusskasten zur Bremse als Bremsspulenwicklungsanschlussleitungen 4 zuführbar. Hierbei ist beispielsweise Litze als jeweilige Bremsspulenwicklungsanschlussleitung 4 verwendbar. Die Spulenwicklung 30 ist als Ringspulenwicklung ausgeführt und weist eine erste und eine weitere Bremsspulenwicklungsanschlussleitung 4 auf.

Die Bremsspulenwicklungsanschlussleitungen 4 sind jeweils mit einem Anschlussteil 5 verbunden, insbesondere schweißverbunden. Das jeweilige Anschlussteil 5 ist vorzugsweise als Stanz-Biegeteil ausgeführt, insbesondere aus Kupferblech.

An das jeweilige Anschlussteil 5 wird auch ein jeweiliges Ende des Wicklungsdrahtes der Bremsspulenwicklung 30 elektrisch verbunden. Die Bremsspulenwicklung 30 ist als Ringwicklung ausgeführt und in einem Spulenträger 8 aufgenommen. Der Spulenträger 8 ist aus Kunststoff ausgeführt, insbesondere als Spritzgussteil.

Der Spulenträger 8 ist mittels eines Hinterschnitts 33 am Innenpol 6 gehalten, wobei der Innenpol 6 hierzu eine Stufe aufweist, also eine radiale Verdickung, welche axial beabstandet ist vom Verbindungsbereich zwischen Innenpol 6 und Magnetkörper, insbesondere Rücken 2.

Der Spulenträger 8 weist eine entsprechende radiale Verdickung auf, die somit in den axialen Zwischenbereich zwischen der Verdickung des Innenpols 6 und dem Verbindungsbereich zwischen Innenpol 6 und Magnetkörper, insbesondere Rücken 2. Somit ist eine axiale Fixierung am Hinterschnitt 33 erreicht. In einen Aufnahmebereich 31 des Spulenträgers 8, der als Ausnehmung in der Verdickung des Spulenträgers 8 ausgebildet ist, ist das Anschlussteil 5 aufgenommen. Der Aufnahmebereich 31 ist als taschenförmiger Spulenkörperabschnitt zur Bildung des Aufnahmebereichs für Anschlussteil 5 und/oder Kabelführung ausgeführt. Außerdem ist am Spulenträger 8 eine umlaufende Nut gebildet, die zur Kabelführung dient und in die taschenförmige Spulenkörperabschnitte mündet.

Mittels der Vertiefung 3 ist eine Kabelführung, insbesondere zur Führung der Statorleitungen, in axialer Richtung über den vom Magnetkörper überdeckten Axialbereich ermöglicht.

Der Spulenträger 8 ist mittels Vergussmasse 40 vergossen im Aufnahmebereich zwischen Außenpol 1 und Innenpol 6.

An demjenigen Umfangswinkelbereich, an welchem das Anschlussteil 5 in radialer Richtung nach radial innen am Spulenträger 8 eingeschoben wird, ragt das Anschlussteil 5 radial weiter nach innen als der innere Durchmesser des Spulenträgers 8. Im entsprechenden Umfangswinkelbereich weist der Innenpol 6 eine radiale Vertiefung auf, so dass das Anschlussteil 5 mit seinem radial inneren Endbereich aufliegt auf dem Innenpol 6.

Der Innenpol 6 ist als Hohlzylindrisches Teil ausgeführt, so dass die Bremsrotorwelle axialdurch den Magnetkörper hindurchragen kann und auf der vom Motor abgewandten Seite der Bremse ein Winkelsensor verbindbar ist.

Das Anschlussteil 5 ist auch als Kontakthaken bezeichenbar.

Die Bremsspule wird mit Gleichstrom versorgt. Bei Bestromung wird eine mit dem Magnetkörper drehfest verbundene, axial bewegbar angeordnete, aus Stahl gefertigte Ankerscheibe der Bremse axial zum Magnetkörper hin bewegt entgegen der von am Magnetkörper abgestützten Federelementen erzeugten Federkraft. Bei Nicht-Bestromung wird die Ankerscheibe vom Magnetkörper weggedrückt und dabei gegen einen drehfest mit der Bremsrotorwelle verbundenen,

Vorteiligerweise ist der Innenpol 6 und der Außenpol 1 aus verschiedenen Werkstoffen herstellbar. Der Innenpol 6 weist höhere Flussdichten auf als der Außenpol 1, wenn das Material des Innenpols 6 eine höhere zulässige Maximalinduktion und/oder steilere Magnetisierungskennlinie aufweist. Somit fallen weniger Eisenverluste und/oder Magnetisierungsverluste an
Vorzugsweise ist der Innenpol 6 aus einem Stangenmaterial auf einem Stangendrehautomaten gefertigt.

Da Außenpol 1 und Rücken 2 des Magnetkörpers eine topfartige Form aufweisen, ist eine einfache Herstellung durch Gießen und/oder Schmieden ermöglicht.

Mittels des Hinterschnitts 33 ist nicht nur eine Fixierung des Spulenträgers 8 zwischen Innenpol 6 und Rücken 2 erreichbar sondern die Innenpolfläche ist größer dimensionierbar als ohne Ausbildung des Hinterschnitts 33. Somit verläuft die Kennlinie zwischen Magnetkraft und Luftspalt weniger steil, wobei der Luftspalt der axiale Abstand zwischen Ankerscheibe und Magnetkörper ist.

Durch die Einpresstiefe des Innenpols 6 in den Rücken 2 des Magnetkörpers lässt sich die Einfallzeit der Bremse vorgeben, insbesondere in Abhängigkeit des Bremsmoments und/oder der Federelemente.

### Bezugszeichenliste

1 Außenpol des Magnetkörpers
2 Rücken des Magnetkörpers
3 Vertiefung zur Kabelführung, insbesondere zur Führung der Statorleitungen
4 Bremsspulenwicklungsanschlussleitung
5 Anschlussteil, insbesondere Stanz-Biegeteil
6 Innenpol
7 Abflachung
8 Spulenträger
30 Spulenwicklung
31 Aufnahmebereich für Anschlussteil 5
32 taschenförmiger Spulenkörperabschnitt zur Bildung des Aufnahmebereichs für Anschlussteil 5 und/oder Kabelführung
33 Hinterschnitt
40 Vergussmasse

## Patentansprüche

1. Elektromagnet, insbesondere Bremsspule, insbesondere für eine elektromagnetisch betätigbare Bremse,
wobei der Elektromagnet eine in einem Spulenträger (8) aufgenommene Spulenwicklung (30) aufweist,
**wobei** der Spulenträger (8) in einem Magnetkörper aufgenommen ist,
wobei der Magnetkörper zwei- oder mehrteilig aufgebaut ist,
**dadurch gekennzeichnet, dass**
ein Innenpol (6) **des Magnetkörpers** aus einem ersten Material gefertigt ist und wobei der Außenpol (1) **des Magnetkörpers** aus einem zweiten Material gefertigt ist,
wobei das erste Material eine höhere spezifische magnetische Permeabilität aufweist als das zweite Material,
**wobei der Innenpol (6) in ein anderes Teil des Magnetkörpers, insbesondere Rücken (2) des Magnetkörpers, eingepresst ist und/oder kraftschlüssig mit diesem Teil verbunden ist,**
**wobei der Außenpol (1) des Magnetkörpers mit dem Rücken (2) des Magnetkörpers einstückig, also einteilig, ausgeführt ist,**
**wobei der Innenpol (6) im Bereich der Verbindung mit dem anderen Teil des Magnetkörpers verjüngt ausgeführt ist, so dass ein Hinterschnitt (33) gebildet ist, in welchem der Spulenträger (8) mit Spulenwicklung (30) begrenzt ist, insbesondere zwischen Hinterschnitt (33) und Rücken (2) des Magnetkörpers.**

2. Elektromagnet nach Anspruch 1,
**dadurch gekennzeichnet, dass**
die Spulenwicklung (30) eine Ringwicklung ist.

3. Elektromagnet nach mindestens einem der vorangegangenen Ansprüche,
**dadurch gekennzeichnet, dass**
das erste Material ein Stahl oder ein Ferrit ist
und/oder dass das zweite Material ein Sphäroguss ist.

4. Elektromagnet nach mindestens einem der vorangegangenen Ansprüche,
**dadurch gekennzeichnet, dass**
der Spulenträger (8) samt Spulenwicklung (30) mittels Vergussmasse (40) im Magnetkörper vergossen ist.

5. Elektromagnet nach mindestens einem der vorangegangenen Ansprüche,
**dadurch gekennzeichnet, dass**
ein Anschlussteil (5), an welchem ein jeweiliges Ende des Spulenwicklungsdrahtes elektrisch verbunden ist und eine Versorgungsleitung, insbesondere eine Litzenleitung, in einen am Spulenträger (8) ausgebildeten taschenförmigen Aufnahmebereich (31) eingeschoben ist,
insbesondere wobei der Innenpol (6) im vom Anschlussteil (5) überdeckten Umfangswinkelbereich eine Abflachung (7) aufweist.

6. Elektromagnet nach mindestens einem der vorangegangenen Ansprüche,
**dadurch gekennzeichnet, dass**
der Innenpol (6) im Wesentlichen zylindrisch ausgeformt ist.

7. Elektromagnet nach mindestens einem der vorangegangenen Ansprüche,
**dadurch gekennzeichnet, dass**
der Außenpol (1) als Rotationskörper ausgebildet ist,
insbesondere wobei eine Vertiefung (3) zur Führung von elektrischen Leitungen am Außenumfang des Außenpols (1) ausgeformt oder eingearbeitet ist und/oder an der einem Motor zugewandten axialen Stirnseite des Außenpols (1) Bohrlöcher, insbesondere in Umfangsrichtung regelmäßig voneinander beabstandete Bohrlöcher, ausgeformt oder eingearbeitet sind, insbesondere zur Aufnahme von Führungselementen zur Führung einer Ankerscheibe einer Bremse und/oder Beabstandungselementen, welche den Außenpol (1) zu dem mit dem Außenpol (1) verbindbaren Elektromotor beabstanden.

8. Elektromagnet nach mindestens einem der vorangegangenen Ansprüche,
**dadurch gekennzeichnet, dass**
der Spulenträger (8) ein Spritzgusskunststoffteil ist.

9. Elektromagnet nach mindestens einem der vorangegangenen Ansprüche,
**dadurch gekennzeichnet, dass**
am Spulenträger (8) ein in Umfangsrichtung umlaufender Kabelführungskanal ausgebildet ist.

10. Elektromagnetisch betätigbaren Bremse mit einem Elektromagnet nach mindestens einem der vorangegangenen Ansprüche.

11. Bremsmotor
**dadurch gekennzeichnet, dass**
der Bremsmotor einen Elektromotor mit einer Elektromagnetisch betätigbaren Bremse nach dem vorhergehenden Anspruch umfasst.

## Claims

1. Electromagnet, in particular brake coil, in particular for an electromagnetically actuatable brake,
wherein the electromagnet has a coil winding (30) accommodated in a coil brace (8),
wherein the coil brace (8) is accommodated in a magnet body,
wherein the magnet body is two-part or multipart construction,
**characterised in that**
an internal pole (6) of the magnet body is produced from a first material and wherein the external pole (1) of the magnet body is produced from a second material,
wherein the first material exhibits a higher specific magnetic permeability than the second material,
wherein the internal pole (6) is pressed into another part of the magnet body, in particular the back (2) of the magnet body, and/or is joined to this part with force locking,
wherein the external pole (1) of the magnet body is realised integrally, thus, in one piece, with the back (2) of the magnet body,
wherein the internal pole (6) is realised reduced in the area of the connection to the other part of the magnet body, so that an undercut (33) is formed, in which area the coil brace (8) together with the coil winding (30) is bounded, in particular between the undercut (33) and the back (2) of the magnet body.

2. Electromagnet according to claim 1,
**characterised in that**
the coil winding (30) is a ring winding.

3. Electromagnet according to at least one of the preceding claims,
**characterised in that**
the first material is a steel or a ferrite
and/or **in that** the second material is a ductile cast iron.

4. Electromagnet according to at least one of the preceding claims,
**characterised in that**
the coil brace (8) together with the coil winding (30) is encapsulated in the magnet body with the aid of potting compound (40).

5. Electromagnet according to at least one of the preceding claims,
**characterised in that**
a connecting part (5), at which one respective end of the coil-winding wire is electrically connected and a supply line, in particular a litz line, is inserted into a pocket-shaped accommodation area (31) formed on the coil brace (8),
in particular wherein the internal pole (6) has a flattened region (7) in the angle-atcircumference area covered by the connecting part (5).

6. Electromagnet according to at least one of the preceding claims,
**characterised in that**
the internal pole (6) is shaped substantially cylindrically.

7. Electromagnet according to at least one of the preceding claims, **characterised in that** the external pole (1) takes the form of a body of rotation,
in particular wherein a depression (3) for the routing of electric lines is formed or incorporated at the circumference of the external pole (1), and/or bore holes are formed or incorporated at the axial end face of the external pole (1) facing a motor, in particular bore holes set apart uniformly from each other in the circumferential direction, in particular for receiving guide elements for the guidance of an armature disc of a brake and/or spacing elements which set apart the external pole (1) relative to the electric motor connectable to the external pole (1).

8. Electromagnet according to at least one of the preceding claims,
**characterised in that**
the coil brace (8) is an injection-moulded plastic part.

9. Electromagnet according to at least one of the preceding claims,
**characterised in that**
a cable-routing channel encircling in the circumferential direction is formed on the coil brace (8).

10. Electromagnetically actuatable brake having an electromagnet according to at least one of the preceding claims.

11. Brake motor
**characterised in that**
the brake motor comprises an electric motor having an electromagnetically actuatable brake according to the preceding claim.

## Revendications

1. Électroaimant, en particulier bobine de frein, en particulier pour un frein à actionnement électromagnétique,
lequel électroaimant présente un enroulement de bobine (30) logé dans un support de bobine (8),
lequel support de bobine (8) est logé dans un corps magnétique,
lequel corps magnétique est construit en deux ou plusieurs parties,
**caractérisé en ce**
**qu'**un pôle intérieur (6) du corps magnétique est réalisé dans un premier matériau et le pôle extérieur (1) du corps magnétique est réalisé dans un deuxième matériau,
le premier matériau présentant une perméabilité magnétique spécifique plus élevée que le deuxième matériau,
le pôle intérieur (6) étant enfoncé dans une autre partie du corps magnétique, en particulier le dos (2) du corps magnétique, et/ou relié à cette partie à force,
le pôle extérieur (1) du corps magnétique étant réalisé d'une seule pièce, donc en une partie, avec le dos (2) du corps magnétique,
le pôle intérieur (6) étant réalisé rétréci dans la zone de la liaison avec l'autre partie du corps magnétique, de sorte qu'une contre-dépouille (33) est formée, dans laquelle le support de bobine (8) avec l'enroulement de bobine (30) est limité, en particulier entre la contre-dépouille (33) et le dos (2) du corps magnétique.

2. Électroaimant selon la revendication 1,
**caractérisé en ce que**
l'enroulement de bobine (30) est un enroulement annulaire.

3. Électroaimant selon au moins l'une des revendications précédentes,
**caractérisé en ce que**
le premier matériau est un acier ou une ferrite
et/ou que le deuxième matériau est une fonte à graphite sphéroïdal.

4. Électroaimant selon au moins l'une des revendications précédentes,
**caractérisé en ce que**
le support de bobine (8) avec l'enroulement de bobine (30) est scellé dans le corps magnétique au moyen d'une masse de scellement (40).

5. Électroaimant selon au moins l'une des revendications précédentes,
**caractérisé en ce**
**qu'**une partie de raccordement (5), à laquelle une extrémité respective du fil d'enroulement de bobine est reliée électriquement, et un câble d'alimentation, en particulier un câble à fils torsadés, est inséré dans une zone de logement (31) en forme de poche formée sur le support de bobine (8),
le pôle intérieur (6) présentant en particulier un méplat (7) dans la zone angulaire circonférentielle recouverte par la partie de raccordement (5).

6. Électroaimant selon au moins l'une des revendications précédentes,
**caractérisé en ce que**
le pôle intérieur (6) est réalisé avec une forme sensiblement cylindrique.

7. Électroaimant selon au moins l'une des revendications précédentes,
**caractérisé en ce que**
le pôle extérieur (1) est réalisé sous la forme d'un corps de révolution,
en particulier un renfoncement (3) étant formé ou ménagé pour guider des câbles électriques sur la circonférence extérieure du pôle extérieur (1) et/ou des trous forés, en particulier des trous forés régulièrement espacés les uns des autres dans la direction circonférentielle, étant formés ou ménagés sur la face frontale axiale du pôle extérieur (1) tournée vers le moteur, en particulier pour loger des éléments de guidage destinés à guider un disque d'induit d'un frein et/ou des éléments d'espacement qui espacent le pôle extérieur (1) du moteur électrique pouvant être relié au pôle extérieur (1).

8. Électroaimant selon au moins l'une des revendications précédentes,
**caractérisé en ce que**
le support de bobine (8) est une pièce en matière plastique moulée par injection.

9. Électroaimant selon au moins l'une des revendications précédentes,
**caractérisé en ce**
**qu'**un canal de guidage de câbles s'étendant tout autour en direction circonférentielle est formé sur le support de bobine (8).

10. Frein à actionnement électromagnétique équipé d'un électroaimant selon au moins l'une des revendications précédentes.

11. Moteur-frein
**caractérisé en ce que**
le moteur-frein comprend un moteur électrique équipé d'un frein à actionnement électromagnétique selon la revendication précédente.
